# EUROPÄISCHE PATENTSCHRIFT

(11) **EP 0 900 324 B1**
(45) Veröffentlichungstag und Bekanntmachung des Hinweises auf die Patenterteilung: **04.10.2001**
(21) Anmeldenummer: 98912355.9
(22) Anmeldetag: 20.02.1998
(51) Int. Cl.: F02B 23/04

(54) **EINSPRITZVORRICHTUNG UND VERBRENNUNGSVERFAHREN FÜR EINE BRENNKRAFTMASCHINE**
INJECTION DEVICE AND COMBUSTION PROCESS FOR AN INTERNAL COMBUSTION ENGINE
DISPOSITIF D'INJECTION ET PROCEDE DE COMBUSTION POUR MOTEURS A COMBUSTION INTERNE

(30) Priorität: 27.02.1997 DE 19707873
(43) Veröffentlichungstag der Anmeldung: 10.03.1999
(73) Patentinhaber: Motorenfabrik Hatz GmbH & Co. KG, 94099 Ruhstorf (DE)
(72) Erfinder: HUFNAGEL, Peter, D-94086 Griesbach (DE)
(74) Vertreter: Grättinger & Partner (GbR)
(86) Internationale Anmeldenummer: EP9800989
(87) Internationale Veröffentlichungsnummer: WO9838418

(56) Entgegenhaltungen:
- BE-A- 505 664
- DE-A- 3 116 638
- DE-A- 3 939 251
- DE-C- 4 418 698
- PATENT ABSTRACTS OF JAPAN vol. 18, no. 534 (M-1685), 11.Oktober 1994 & JP 06 185365 A (TOYOTA), 5.Juli 1994,
- PATENT ABSTRACTS OF JAPAN vol. 16, no. 82 (M-1215), 27.Februar 1992 & JP 03 264725 A (YANMAR DIESEL), 26.November 1991,
- PATENT ABSTRACTS OF JAPAN vol. 8, no. 240 (M-336) [1677] , 6.November 1984 & JP 59 120715 A (HINO), 12.Juli 1984,

## Beschreibung

Die Erfindung betrifft eine Brennkraftmaschine, insbesondere Dieselbrennkraftmaschine und ein Verbrennungsverfahren für eine solche Brennkraftmaschine.

Bei herkömmlichen Dieselmotoren wird zwischen zwei Hauptverbrennungsverfahren unterschieden, dem Nebenkammerverfahren und dem Direkteinspritzverfahren.

Beim Nebenkammerverfahren wird die Verbrennung in einem Nebenraum eingeleitet, der sich z.B. im Zylinderkopf befindet. Diese sog. Vor- oder Wirbelkammer ist an einer Seite direkt mit der Einspritzdüse und an der anderen Seite mit dem Hauptbrennraum verbunden. Am Ende des Verdichtungstaktes wird Kraftstoff in den Nebenraum eingespritzt und die Verbrennung zunächst im Nebenraum unter O₂-Mangel eingeleitet, d.h. in dieser Phase entstehen relativ geringe NOx-Konzentrationen. Durch das Überströmen der Verbrennungsgase erfolgt ein weicher Druckanstieg im Hauptbrennraum. Das damit verbundene niedrige Temperaturniveau begrenzt die NOx-Entstehung weiter. Beim Wirbelkammerverfahren wird durch entsprechende geometrische Gestaltung des Nebenraumes und des Überströmkanals eine verbesserte Verwirbelung gegenüber dem reinen Vorkammerverfahren erzielt. Bei beiden Verbrennungsverfahren kann eine ungenügende Gemischaufbereitung zu relativ langen Zündverzügen führen. Der Gesamtwirkungsgrad ist geringer als beim Direkteinspritzverfahren, was einen höheren Kraftstoffverbrauch und damit eine höhere CO₂-Emission zur Folge hat.

Beim Direkteinspritzverfahren wird der Kraftstoff direkt in den Verbrennungsraum über dem Kolbenboden eingebracht. Kraftstoffzerstäubung, Erwärmung, Verdampfung und Vermischung mit der Luft müssen daher in einer kurzen zeitlichen Folge ablaufen. Im Gegensatz zum Nebenkammermotor mit seiner Drosselzapfendüse, welche einen Strahlenfächer erzeugt, verwendet man beim Direkteinspritzverfahren Mehrlochdüsen, welche einzelne Strahlen erzeugen. Verglichen mit dem Nebenkammerverbrennungsverfahren liegt der Kraftstoffverbrauch ca. 20 % niedriger. Jedoch besteht aufgrund des steilen Druckanstiegs der Nachteil der hohen Geräuschbildung und erhöhten NOx-Emission. Auch werden höhere Einspritzdrücke benötigt, was die Kosten der Einspritzanlage erhöht. Aufgrund der kurzen Gemischbildungszeit, können sich Kraftstoffwandablagerungen bilden.

Bei einer nach JP 3-264725 (A) bekannten Brennkammer für Brennkraftmaschinen bilden vom Zylinderkopf und vom Kolbenboden abragende zylindrische Ummantelungen zusammen eine Vorkammer. Im OT greifen sie dabei koaxial ineinander, wobei ein Teil des in die Vorkammer eingespritzten Kraftstoffs durch Öffnungen in der oberen und Schlitze in der unteren Ummantelung in die Brennkammer gelangt. Die Verbrennung findet hier zunächst in der Vorkammer statt, wo sie bedingt durch die lange Überlappungsphase der beiden Ummantelungen bis weit in die Expansionsphase hinein getrennt von der Brennkammer aufrechterhalten wird. Erst mit der zunehmenden Öffnung des Ringspalts beim Auseinanderfahren der beiden Ummantelungen ergießen sich die Vorkammergase in die eigentliche Brennkammer, was einen hohen spezifischen Verbrauch zur Folge hat.

In der DE 3805009 A1 wird ein Kolben für einen Dieselmotor mit Direkteinspritzung des Kraftstoffs beschrieben, wobei die dem Verbrennungsraum und dem Zylinderkopf zugewandte Stirnseite des Kolbens in ihrer Mitte eine sich in das Kolbeninnere hinein erstreckende zylindrische Vertiefung aufweist. Dieses bekannte Direkteinspritzverfahren arbeitet mit einer Einstrahldüse, deren Einspritzung zunächst ausschließlich in die zylindrische Vertiefung erfolgt. Auf der Stirnfläche des Kolbens sind zur Verbesserung des Verfahrens langgestreckte und zum Verbrennungsraum offene Vertiefungen vorgesehen, die mit einem ihrer Enden in die zylindrische Vertiefung münden und mit ihrem anderen Ende zumindest in einer geringen Entfernung vom Mantel des Kolbens enden. Durch eine derartige Ausbildung der Kolbenstirnseite soll das "Nageln" bzw. "Klopfen" des Dieselmotors reduziert werden. Das in der DE 3805009 A1 beschriebene Verfahren bringt ähnliche Nachteile wie die oben beschriebenen Kammerverfahren, insbesondere Wärmeverluste an der Kammerwand/Vertiefungswand, mit sich.

Schließlich ist aus JP 06 185365 A eine Brennkraftmaschine bekannt, bei welcher ein Brennraum mit einer Vorkammer zusammenwirkt. In den durch Kolben, Zylinder und Zylinderkopf gebildeten Brennraum ragt eine Ummantelung hinein, welche durch einen Vorsprung des Zylinderkopfs gebildet ist. Diese Ummantelung bildet im OT zusammen mit dem Kolbenboden eine Vorkammer, in welcher eine Vorverbrennung stattfindet, wobei innerhalb der Ummantelung eine Einspritzdüse in Form einer Mehrlochdüse angeordent ist. Im OT gelangen Bohrungen in der Ummantelung mit solchen der die Ummantelung eng umgebenden Wand des Kolbenbodens miteinander in fluchtende Verbindung, so daß die verdichtete Luft aus dem Brennraum durch diese Bohrungen in die Vorkammer gelangt, wo sie sich mit dem eingespritzten Kraftstoff vermischt. Konstruktiv gesehen ist dabei der Gleitsitz zwischen der Außenwand der Ummantelung und der Wand des Kolbenbodens problematisch und nicht ohne besonderen Herstellungsaufwand zu verwirklichen.

Demgegenüber besteht die Aufgabe der vorliegenden Erfindung darin, eine Brennkraftmaschine mit einer kostengünstigen Einspritzvorrich-tung zu schaffen, welche bei einem entsprechenden Verbrennungsverfahren zu einer Senkung der Schadstoffemission ohne Beeinflussung des günstigen Gesamtwirkungsgrades eines Direkteinspritz-verfahrens führt.

Diese Aufgabe wird durch eine Brennkraftmaschine und ein Verbrennungsverfahren mit den Merkmalen der Ansprüche 1 und 7 gelöst.

Die erfindungsgemäße Brennkraftmaschine weist dabei einen durch Kolben, Zylinder und Zylinderkopf gebildeten Brennraum, eine als Mehrlochdüse ausgebildeten Einspritzdüse und eine vom Zylinderkopf in den Brennraum hineinragende Ummantelung auf, welche die Düse umgibt wobei die Ummantelung Öffnungen in den Brennraum aufweist. Vor Erreichen des OT ist die Ummantelung zum Brennraum hin offen; am Ende des Verdichtungstakts erfolgt eine Direkteinspritzung. Im OT-Bereich wird zwischen Ummantelung und Kolben eine Vorkammer ausgebildet, in der eine Vorverbrennung eines homogenen Gemischs unter O₂-Mangel stattfindet. Aufgrund der geringen Wandstärke der Ummantelung sind die Wärmeverluste an das Material gering und es herrschen weitgehend gleiche Temperaturverhältnisse in Vorkammer und Hauptbrennraum. Durch die Kombination der Wirbelkammer- und Direkteinspritzung wird ein weicher Druckanstieg verbunden mit einer Senkung der NOx- und HC-Emission ermöglicht, ohne den Gesamtwirkungsgrad zu beeinflussen. Durch einstückiges Anformen der Ummantelung an den Zylinderkopf oder Befestigen einer aus hochwarmfestem Stahl hergestellten Hülse in der Einspritzdüsenbohrung, wird eine kostengünstige Einspritzvorrichtung der erfindungsgemäßen Art geschaffen.

Dabei ist erfindungsgemäß vorgesehen, daß die Öffnungen in der Ummantelung mit den Düsenlöchern fluchtend, d.h. gegenüberliegend, angeordnet sind, wobei der Durchmesser der Öffnung gerade so gewählt ist, daß ein Teil des Düsenstrahles, nämlich die bereits in hohem Maße aus nahezu homogenen Gemischanteilen bestehenden äußeren Randbereiche, innerhalb der Ummantelung zurückgehalten wird, während der flüssige Kern des Einspritzstrahls ungehindert in den Hauptbrennraum durchtritt. Hierdurch wird eine vorteilhafte Ladungsschichtung erreicht. Die Ausrichtung der Düsenlöcher mit den Öffnungen der Ummantelung kann entweder durch Verdrehen der Düse oder bei angesetzter Ummantelung durch Verdrehen dieser gegen die Düse erfolgen. In der Einspritzphase wird erreicht, daß die Randbereiche des Einspritzstrahls, die bereits in hohem Maße nahezu homogene Gemischanteile aufweisen, in einem sauerstoffarmen, weitgehend abgegrenzten Teilvolumen vor der eigentlichen Verbrennung zur Zündung gebracht werden. Die NOx-Bildung in dieser Phase ist aufgrund des Sauerstoffmangels und der niedrigen Temperaturen gering, ebenso die HC-Bildung aufgrund der im Verhältnis zur eingespritzten Kraftstoffmenge kleinen Wandoberflächen.

Eine vorteilhafte Weiterbildung der vorliegenden Erfindung sieht vor, daß der Kolben eine Brennraummulde aufweist, wobei die im OT gebildete Vorkammer einerseits vom Zylinderkopf und der davon hervorstehenden Ummantelung und andererseits vom Kolben im Bereich der Brennraummulde begrenzt wird. Durch die derart gebildete Vor- bzw. Wirbelkammer wird eine Vorzündung in der Wirbelkammer und anschließendes Überströmen der Verbrennungsgase in die Hauptbrennkammer erreicht, was zu einem wesentlich weicheren Druckanstieg im Hauptbrennraum und damit zu niedrigeren Temperaturspitzen führt. Dies wiederum führt zu einer Verminderung der NOx-Werte.

Des weiteren sieht eine vorteilhafte Ausführungsform vor, daß die Brennraummulde in der Mitte eine Aufwölbung des Bodens aufweist, welche im OT-Bereich von der Ummantelung umgeben wird und die Vorkammer in einer Richtung begrenzt. Auf der Aufwölbung des Bodens können zusätzlich spiralförmige Vertiefungen angeordnet sein.

Hierdurch werden die Vermischung des Verbrennungsgemisches im Hauptbrennraum optimiert sowie Kraftstoff-Wandanlagerungen wieder abgespült. Außerdem wird ein weicher Druckanstieg bei gleichmäßiger Durchmischung im Hauptbrennraum erzielt. Dabei ist eine Optimierung des Winkels zwischen Schuß, d.h. dem von der Wirbelkammer in die Hauptbrennkammer austretenden Verbrennungsgas, und Muldendrallwinkel möglich.

Schließlich sieht eine vorteilhafte Weiterbildung der vorliegenden Erfindung vor, daß die Ummantelung sich zum Kolben hin kegelstumpfförmig verjüngend ausgebildet ist. Hierdurch wird eine gleichmäßige Verbrennung gefördert. Durch entsprechende Wahl des Kegelwinkels stehen die Achsen der Düsenstrahlen senkrecht auf der Ummantelung.

Bei einem Verbrennungsverfahren mit einer oben beschriebenen Einspritzvorrichtung erfolgt im OT-Bereich eine kombinierte Direkt-/Wirbelkammer-einspritzung. Dabei ist mit der Bezeichnung OT der Bereich kurz vor und kurz nach dem oberen Totpunkt des Kolbens sinngemäß eingeschlossen. Durch dieses Verfahren wird der Gesamtwirkungsgrad einer Direkteinspritzung erzielt, wobei aufgrund der Ladungsschichtung eine Senkung der NOx-, CO- und HC-Emission erreicht wird.

Des weiteren ist es vorteilhaft, daß zu Beginn des Arbeitstaktes zunächst eine Vorzündung in der Vorkammer erfolgt und die Verbrennungsgase über einen zwischen Ummantelung und Kolben gebildeten Spalt in den Hauptbrennraum überströmen. Dies führt zu einem weichen Druckanstieg im Hauptbrennraum, wodurch "Klopfen" und "Nageln" verhindert werden.

Weitere Vorteile und konstruktive Merkmale werden durch die Beschreibung des folgenden Ausführungsbeispieles anhand der beigefügten Zeichnung beschrieben. Dabei zeigen:
- Fig. 1: eine Einspritzvorrichtung gemäß der vorliegenden Erfindung im eingebauten Zustand, und
- Fig. 2: einen Schnitt entlang der Linie II-II aus Fig. 1.

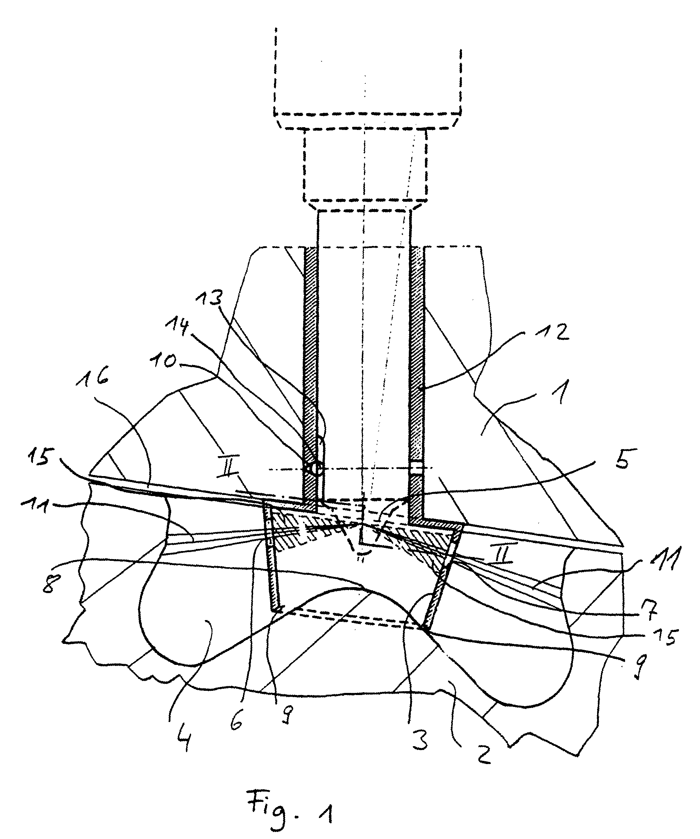

Fig. 1 zeigt einen Schnitt durch einen Zylinderkopf 1 und einen Kolben 2, wobei sich der Kolben 2 im OT befindet. Eine gestrichelt angedeutete Mehrlocheinspritzdüse 5 ist dabei nahezu senkrecht im Zylinderkopf 1 montiert. Die Mehrlocheinspritzdüse 5 ist so winkeljustiert, daß die Düsenlöcher den Öffnungen 6, 7 der kegelstumpfförmigen Ummantelung 3 gegenüberliegend angeordnet sind. Die Ummantelung 3 ragt in die Brennraummulde 4 des Kolbens 2 derart hinein, daß zwischen Auswölbung 8 der Brennraummulde und der Ummantelung 3 ein Spalt 9 gebildet wird. Das Spaltmaß beträgt dabei nur wenige zehntel Millimeter. Die aus hochwarmfestem Stahl gefertigte Ummantelung wird dabei an einer Hülse 12 gehalten, die zwischen Einspritzdüse 5 und Zylinderkopf 1 winkeljustierbar ist. Zur einfacheren Montage weist die Düse eine Zentriervorrichtung 10 bestehend aus einer Nut 13 und einer Kugel 14 auf, die in einen Konus an der Innenwand der Hülse einrastet. Auf diese Weise ist es möglich die Düsenlöcher den Öffnungen der Ummantelung gegenüberliegend auszurichten ohne den Zylinderkopf zu demontieren. Der zeichnerisch angedeutete Kernstrahl 11 der Düse 5 tritt durch die Öffnungen 6,7 hindurch, wogegen die Randbereiche des Düsenstrahls 15 von der Ummantelung 3 zurückgehalten wird. Dabei weist der Düsenstrahl einen Aufweitungskegelwinkel von ca. 24° auf.

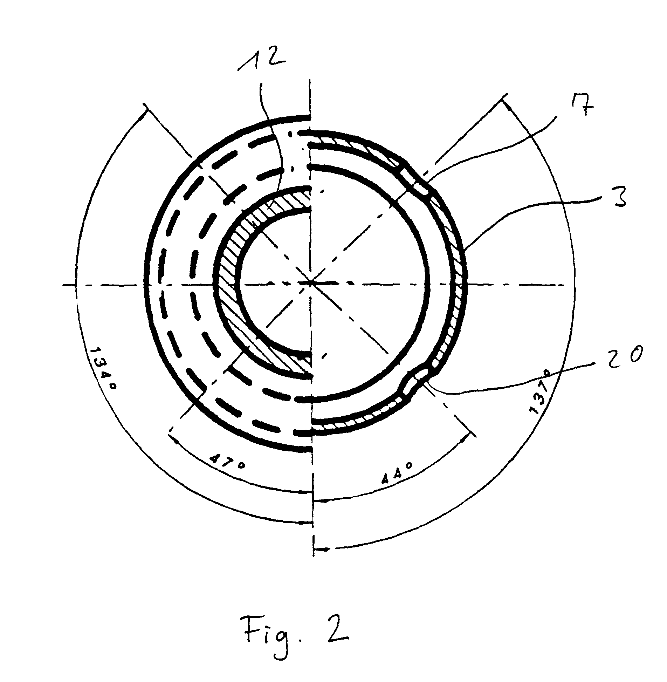

Fig. 2 zeigt einen Schnitt entlang der Schnittlinie II-II aus Fig. 1, worin die Öffnungen 7 bzw. 20 der Ummantelung dargestellt sind, die den Einspritzlöchern der Mehrlocheinspritzdüse gegenüberliegend angeordnet sind. Bei jedem Einspritzvorgang dringt der Kernstrahl durch die Öffnung 7, 20 der Ummantelung 3 hindurch und gelangt in den Hauptbrennraum 16 (Fig. 1). Nur der Strahlrandbereich wird von der Ummantelung zurückgehalten und im OT innerhalb der von Ummantelung 3 gebildeten Vorkammer gezündet. Die durch den Spalt 9 und die Brennraummulde 4 herausströmenden Verbrennungsgase vermischen sich mit der in der Hauptbrennkammer 16 zeitlich verzögert stattfindenden Verbrennung. Dabei haben die aus der Vorkammer austretenden Verbrennungsgase einen Drall, der für eine gute Durchmischung des Hauptbrennraums 16 sorgt und Kraftstoffwandablagerungen verhindert.

## Patentansprüche

1. Brennkraftmaschine, insbesondere Dieselbrennkraftmaschine mit jeweils einem durch Kolben (2), Zylinder und Zylinderkopf (1) gebildeten Brennraum (16), einer als Mehrlochdüse ausgebildeten Einspritzdüse (5) und einer vom Zylinderkopf (1) in den Brennraum (16) hineinragenden Ummantelung (3), welche die Düse (5) umgibt und eine Vorkammer begrenzt, in welcher eine Vorverbrennung stattfindet, wobei die Ummantelung (3) Öffnungen (6, 7, 20) in den Brennraum aufweist und im OT zusammen mit dem Kolbenboden die Vorkammer bildet,
**dadurch gekennzeichnet,**
**daß** die Öffnungen (6, 7, 20) in der Ummantelung (3) mit den Düsenlöchern fluchtend angeordnet sind, wobei der Durchmesser der Öffnungen (6, 7, 20) gerade so gewählt ist, daß jeweils ein Randbereich eines Düsenstrahles (15) innerhalb der Ummantelung (3) zurückgehalten wird.

2. Brennkraftmaschine nach Anspruch 1,
**dadurch gekennzeichnet,**
**daß** der Kolben (2) eine Brennraummulde (4) aufweist, in welche die Ummantelung hineinragt, derart, daß die im OT gebildete Vorkammer einerseits vom Zylinderkopf (1) und der davon vorstehenden Ummantelung (3) und andererseits vom Kolben im Bereich der Brennraummulde (4) begrenzt ist.

3. Brennkraftmaschine nach Anspruch 1,
**dadurch gekennzeichnet,**
**daß** die Brennraummulde (4) in der Mitte eine Aufwölbung (8) des Bodens aufweist, welche im OT-Bereich von der Ummantelung (3) umgeben wird und die Vorkammer in einer Richtung begrenzt.

4. Brennkraftmaschine nach Anspruch 1,
**dadurch gekennzeichnet,**
**daß** im OT zwischen Ummantelung (3) und Aufwölbung (8) der Brennraummulde (4) ein Spalt (9) ausgebildet ist, durch den während der Vorverbrennung Verbrennungsgase in den Hauptbrennraum (16) austreten.

5. Brennkraftmaschine nach Anspruch 1,
**dadurch gekennzeichnet,**
**daß** die Ummantelung (3) sich zum Kolben hin kegelstumpfförmig verjüngend ausgebildet ist.

6. Verbrennungsverfahren für eine Brennkraftmaschine, insbesondere für einen Dieselmotor, mit einer Einspritzvorrichtung nach Anspruch 1, wobei im OT-Bereich eine kombinierte Direkt/Wirbelkammereinspritzung erfolgt.

7. Verbrennungsverfahren nach Anspruch 6,
**dadurch gekennzeichnet,**
**daß** zu Beginn des Arbeitstakts zunächst eine Vorzündung in der Vorkammer erfolgt und die Verbrennungsgase über einen zwischen Ummantelung und Kolben gebildeten Spalt in den Hauptbrennraum gelangen.

## Claims

1. An internal combustion engine, in particular a Diesel engine having a combustion chamber (16) formed by a piston (2), cylinder and cylinder head (1), a multi-hole injection nozzle (5) and a casing (3) which projects from the cylinder head (1) into the combustion chamber (16) and surrounds the nozzle (5) so that there is bounded a pre-combustion chamber where pre-combustion occurs, the casing (3) having apertures (6, 7, 20) leading to the combustion chamber and forming a pre-combustion chamber in conjunction with the piston head face at top dead centre,
**characterised in that**
the apertures (6, 7, 20) are aligned to the nozzle holes in the casing (3), the diameter of the apertures (6, 7, 20) being such that a peripheral area of each nozzle stream (15) is retained within the casing (3).

2. An internal combustion engine according to Claim 1,
**characterised in that**
the piston (2) has a combustion chamber recess (4) into which the casing projects so that the pre-combustion chamber formed at top dead centre is bounded on the one hand by the cylinder head (1) and the casing (3) projecting from it and, on the other, by the piston in the area of the combustion chamber recess (4).

3. An internal combustion engine according to Claim 1,
**characterised in that**
the combustion chamber recess (4) has a domed area (8) in the centre of the piston head face surrounded by the casing (3) at top dead centre and bounding the pre-combustion chamber in one direction.

4. An internal combustion engine according to Claim 1,
**characterised in that**
a gap (9) is formed at top dead centre between the casing (3) and the domed area (8) in the combustion chamber recess (4) through which combustion gases exit into the main combustion chamber (16).

5. An internal combustion engine according to Claim 1,
**characterised in that**
the casing (3) tapers in the direction of the piston to form a truncated cone.

6. A combustion process for an internal combustion engine, in particular a Diesel engine. using an injection device according to Claim 1, with combined direct and swirl chamber injection.

7. A combustion process according to Claim 6,
**characterised in that**
at the beginning of the power cycle, pre-combustion occurs in the pre-combustion chamber first and the combustion gases pass through the gap between the casing and the piston into the main combustion chamber.

## Revendications

1. Moteur à combustion interne, en particulier moteur Diesel, comprenant une chambre de combustion (16) définie par le piston (2), le cylindre et la culasse (1), une buse d'injecteur (5) se présentant sous la forme d'une buse multitrous et une enveloppe (3) qui fait saillie à partir de la culasse (1) dans la chambre de combustion (16), entoure la buse (5) et délimite une préchambre à l'intérieur de laquelle a lieu une précombustion, l'enveloppe (3) comportant des ouvertures (6, 7, 20) dans la chambre de combustion et formant la préchambre avec le fond du piston au PMS, **caractérisé en ce que** les ouvertures (6, 7, 20) dans l'enveloppe (3) sont alignées avec les trous de la buse, le diamètre des ouvertures (6, 7, 20) étant choisi tel que chaque fois une zone de bord d'un jet (15) soit retenue à l'intérieur de l'enveloppe (3).

2. Moteur à combustion interne selon la revendication 1, **caractérisé en ce que** le piston (2) comporte une cavité de chambre de combustion (4) dans laquelle l'enveloppe pénètre de manière telle que la préchambre formée au PMS est délimitée d'un côté par la culasse (1) et l'enveloppe (3) faisant saillie sur celle-ci et de l'autre par le piston dans la région de la cavité de chambre de combustion (4).

3. Moteur à combustion interne selon la revendication 1, **caractérisé en ce que** la cavité de chambre de combustion (4), en son centre, présente une bosse (8) au niveau de son fond, qui dans la région du PMS est entourée par l'enveloppe (3) et délimite la préchambre dans une direction.

4. Moteur à combustion interne selon la revendication 1, **caractérisé en ce qu'**au PMS il se forme, entre l'enveloppe (3) et la bosse (8) dans la cavité de chambre de combustion (4), une fente (9) par laquelle les gaz de combustion s'échappent vers la chambre de combustion principale (16) pendant la précombustion.

5. Moteur à combustion interne selon la revendication 1, **caractérisé en ce que** l'enveloppe (3) se rétrécit en forme de tronc de cône en direction du piston.

6. Procédé de combustion pour un moteur à combustion interne, en particulier pour un moteur Diesel, comportant un dispositif d'injection selon la revendication 1, selon lequel une injection combinée directe/à chambre de turbulence a lieu dans la région du PMS.

7. Procédé de combustion selon la revendication 6, **caractérisé en ce qu'**au début du temps moteur, un préallumage a d'abord lieu dans la préchambre, à la suite de quoi les gaz de combustion pénètrent dans la chambre de combustion principale par une fente formée entre l'enveloppe et le piston.
